# EUROPEAN PATENT SPECIFICATION

(11) **EP 2 201 577 B1**
(45) Date of publication and mention of the grant of the patent: **19.12.2012**
(21) Application number: 08841596.3
(22) Date of filing: 20.10.2008
(51) Int. Cl.: G21C 19/07, G21C 19/40, G21F 5/012, G21F 5/06

(54) **PACKAGE ASSEMBLIES AND INTERNAL SUPPORT STRUCTURES FOR TRANSPORT AND STORAGE OF RADIOACTIVE MATERIALS**
VERPACKUNGSANORDNUNGEN UND INNENSTÜTZSTRUKTUREN FÜR TRANSPORT UND LAGERUNG VON RADIOAKTIVEM MATERIAL
KITS D'EMBALLAGE ET STRUCTURES DE SUPPORT INTERNES POUR LE TRANSPORT ET LE STOCKAGE DE MATÉRIAUX RADIOACTIFS

(30) Priority: 19.10.2007 US 999788 P
(43) Date of publication of application: 30.06.2010
(73) Proprietor: Areva Federal Services LLC, Federal Way, WA 98003 (US)
(72) Inventor: TEMUS, Charles, Joseph, Puyallup, WA 98373 (US); ROSS, Alec, University Place, WA 98464-1332 (US); CRIDDLE, Tom, Tacoma, WA 98405 (US)
(74) Representative: Ilgart, Jean-Christophe
(86) International application number: PCT/US2008/080536
(87) International publication number: WO 2009/055345

(56) References cited:
- WO-A1-97/42636
- WO-A1-99/41754
- DE-A1- 19 823 020
- US-A- 3 466 445
- US-A- 5 550 882
- US-A- 5 715 289
- US-A1- 2005 056 563

## Description

### CROSS-REFERENCE TO RELATED APPLICATION

This application claims the benefit of U.S. Provisional Patent Application No. 60/999,788, filed October 19, 2007.

### TECHNICAL FIELD

Embodiments of the present disclosure relate generally to package assemblies and internal support structure for the transport and/or storage of radioactive materials and, more specifically, to package assemblies having non-metallic internal support structures.

### BACKGROUND

Traditional radioactive transport assembly internals or baskets have generally been limited to metallic components, usually steel (stainless or carbon) or aluminum. While these components have a demonstrated record of surviving accident conditions, metallic components tend to add significant weight to a transport package and tend to be costly to manufacture with little-to-no guarantee of repeatable geometry for part interchangeability.

Non-metallic materials with superior thermal and structural properties have been developed for use in the automotive, aerospace, and defense industries for high temperature under hood components, aircraft structural components, and ballistic armor, respectively. With the accepted application of non-metallic materials in these industries, their extension into the field of radioactive transport packages has become a potential area of development.

With the proper selection of compounds, non-metallic materials that can survive both impact loads and high temperatures may meet the requirements of a radioactive transport package. The added benefit of using non-metallic materials for components with large production quantities is that, following the qualification of the tooling, the parts can be made economically with repeatable geometry. Such repeatable geometry allows for interchangeability of parts for process standardization and improved process efficiencies.

Documents US 3466445 and DE 19823020 disclose package assemblies of the prior art.

Therefore, there exists a need for an improved radioactive transport package having internals or baskets made from non-metallic materials that can survive both impact loads and exposure to high temperatures.

### SUMMARY

This summary is provided to introduce a selection of concepts in a simplified form that are further described below in the Detailed Description.

The present invention relates to a package assembly for radioactive material according to claim 1, Embodiments are defined in the dependent claims 2-4.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is a partially cut-away perspective view of a package assembly formed according to various aspects of the present disclosure;
FIGURE 2 is an exploded view of the package assembly of FIGURE 1;
FIGURE 3 is cross-sectional side view of the package assembly of FIGURE 1; and
FIGURES 4-7 are partially exploded views of various components of the package assembly of FIGURE 1.

### DETAILED DESCRIPTION

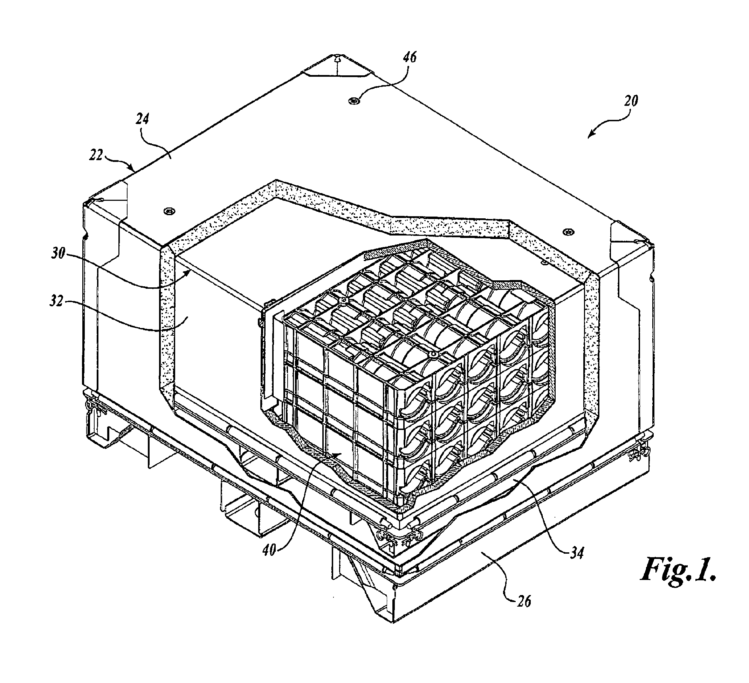

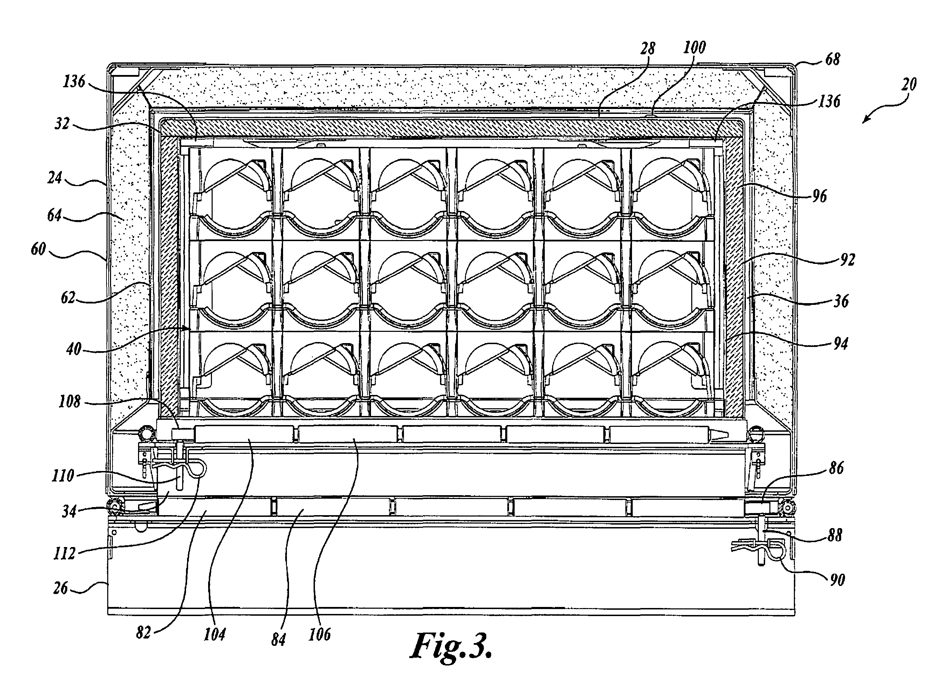

Embodiments of the present disclosure are generally directed to package assemblies for transporting and/or storing radioactive materials, wherein package assemblies generally include non-metallic internal support structures. Referring to FIGURES 1-3, there is shown a package assembly, generally indicated 20, constructed in accordance with the one embodiment of the present disclosure. The package assembly 20 generally includes an outer container 22, including a cover portion 24 and a base portion 26 and defining an inner cavity 28 (see FIGURE 3). The package assembly 20 further includes an inner container 30 configured to be receivable within the inner cavity 28 of the outer container 22. The inner container 30 includes a cover portion 32 and a base portion 34 and defines an inner cavity 36 (see FIGURE 3).

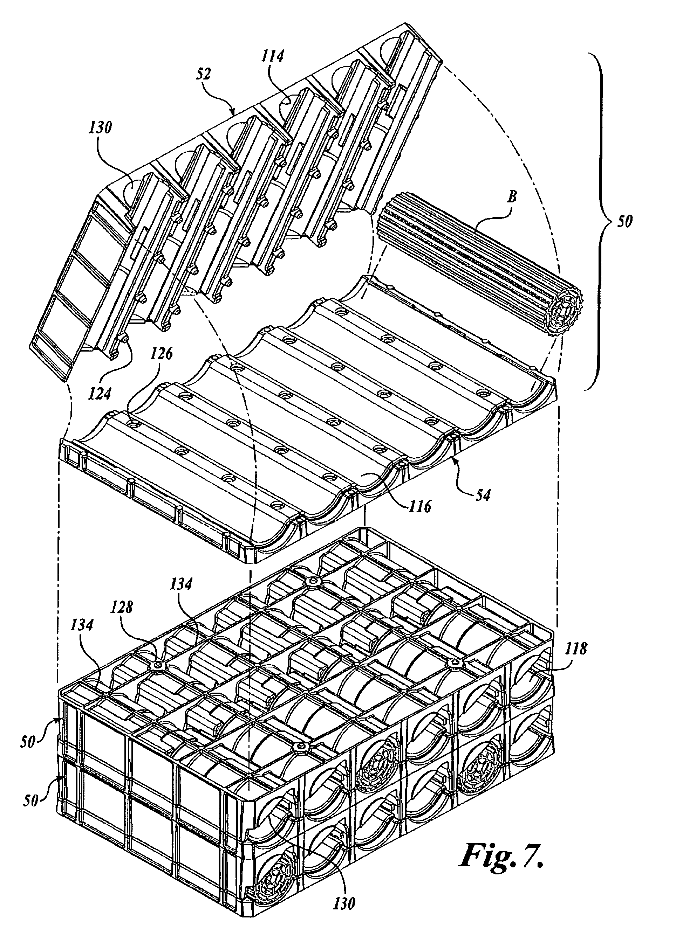

The package assembly 20 further includes an internal support structure 40 configured to be receivable within the inner cavity 36 of the inner container 30. The internal support structure 40 is configured to maintain a suitable geometry for shielding and maintaining criticality control of the contents in the package assembly 20. As described in greater detail below, the internal support structure 40 is constructed from a non-metallic material. In the illustrated embodiment, the internal support structure 40 includes a plurality of support trays 50 (see FIGURE 7). However, it should be appreciated that other non-metallic internal support structures 40, such as internal baffles, baskets, wear pads, vibration dampeners, and other support structures of suitable geometry for shielding and maintaining criticality control of the contents in the package assembly 20 are also within the scope of the present disclosure.

The support trays 50 includes first and second portions 52 and 54 (see FIGURE 7), and such first and second portions 52 and 54 are stackable to form an internal support structure 40. It should be appreciated that the metal components of the package assembly 20, for example, portions of the outer and inner containers 22 and 30 may be constructed from steel, for example, Type 304 stainless steel having full-thickness fillet welds.

Embodiments of the assembly 20 described herein are designed and configured for the storage and/or transportation of radioactive materials, including but not limited to uranium pellets and fuel rod bundles, such as, for example, low void reactivity fuel (LVRF) bundles, as described in Published International Application No. WO 97/41565, filed on April 23, 1997, the disclosure of which is hereby expressly incorporated by reference. In the illustrated embodiment, the assembly 20 includes fuel bundles B (see FIGURE 7).

The radioactive material may be uranium oxide enriched, for example, in the case of LVRF, up to a maximum of 1.33% and may include dysprosium oxide, which acts as a burnable poison. Accordingly, embodiments of the assembly 20 are minimally designed to protect the transport staff, other people, and the environment from the potentially hazardous material as a result of fire, submersion, impact, or damage to the assembly 20. Minimal design parameters include containment of the radioactive material without release to the environment when subjected to standard crush, drop, puncture, hypothetical fire, and water immersion tests, which are required for assembly certification.

Despite these design certification parameters, it should be appreciated that embodiments of the assembly 20 described herein can also be used to store and/or transport other radioactive or non-radioactive materials, such as fissile fuel assemblies for research reactors, pressurized water reactors, boiling water reactors, pebble bed reactors, and other reactors. The materials may include fuel bundles, fuel pellets, and/or containers of radioactive materials, such as vials, canisters, or other containers.

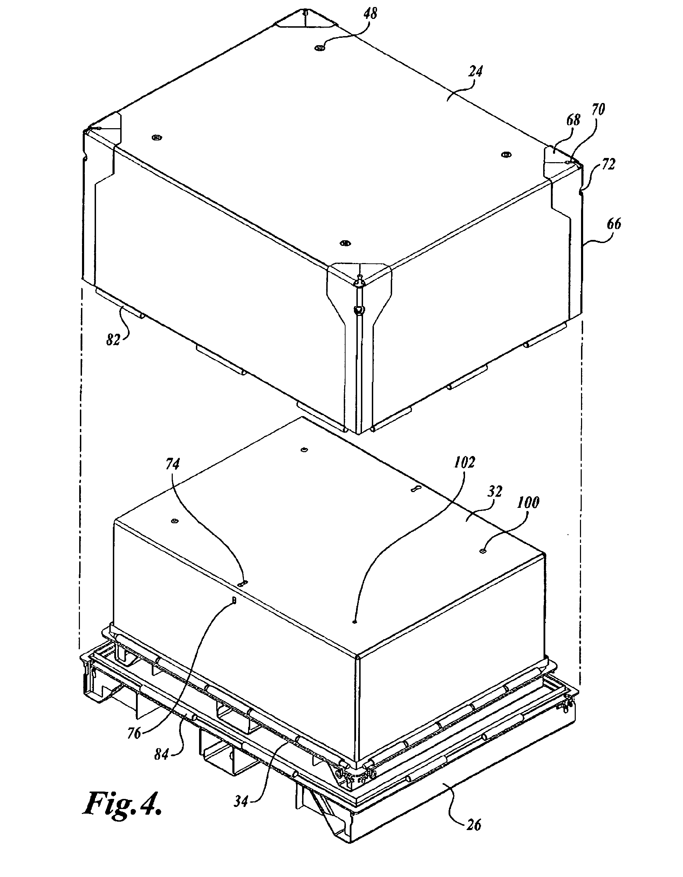

Further, embodiments of the assembly 20 of the present disclosure are generally sized and configured to be transportable, for example, to be carried by suitable transportation means, such as forklifts, highway trucks, and rail cars. However, it should be appreciated that non-portable or stationary assemblies, for example, whether used in storage and/or mixed storage and transportation applications, are also within the scope of the present disclosure. Moreover, the outer and inner containers 22 and 30 are generally designed to be easily handled and opened to allow for periodic inspections of the contents, as seen in exemplary disassembly of the package assembly 20 in the sequence of FIGURES 4-7.

Due to in-plant handling requirements, the various components of the assembly 20 may be designed to be interchangeable. Because the inner containers 30 are generally transported with outer containers 22, but not stored with the outer containers 22, the inner containers 30 are required to be interchangeable with any outer container 22 that is used for transportation. Likewise, because the internal support structures 40 can be moved from one inner container 30 to another during loading and during processing, the internal support structures 40 may also be interchangeable with the inner containers 30. Such interchangeability requires precision manufacturing of individual components.

While embodiments of the assembly 20 described herein generally include an outer container 22, an inner container 30, and an internal support structure 40, it should be appreciated that embodiments of the present disclosure are also directed to discrete elements of the assembly 20, for example, a discrete internal support structure 40 or discrete support trays 50, i.e., without including an inner container 30 or an outer container 22. It should further be appreciated that embodiments of the present disclosure may also be directed to other combinations of components, for example, an internal support structure 40 which may be housed within an inner container 30, i.e., without including an outer container 22.

The individual components of package assembly 20 will now be described in greater detail, beginning with the outer container 22 or overpack assembly. Referring to FIGURES 1-3, the outer container 22 is the outermost container of the assembly 20, and as such, is designed to provide suitable protection for its contents. In that regard, the outer container 22 is particularly designed to withstand accident conditions with minimal damage to the outer container 22 or any contents housed inside. Such accident conditions include normal conditions of transport (NCT) 1-2-meter (4-foot) free drops (e.g., flat side drops, CG over top corner drop, and CG over bottom short edge), accident conditions of transport (ACT) 9-meter (30-foot) free drops (e.g., flat side drops, CG over top corner drop, and CG over bottom short edge), and puncture drop test (e.g., dropping the package assembly on a 15.2 cm (6-inch) diameter steel bar from a height of 1 m (40 inches).

In the illustrated embodiment, the outer container 22 is generally a flat-sided rectangular box including a cover portion 24 and a base portion 26 and defining an inner cavity 28. In one non-limiting example, the flat-sided rectangular box may have a length of about 1.3 m (52 inches) a width of about) 1.05 m (41.6 inches), and a height of about 80.3 cm (31.6 inches). It should be appreciated, however, that other shapes and sizes of outer containers are within the scope of the present disclosure, so long as they mate with the other components of the assembly 20.

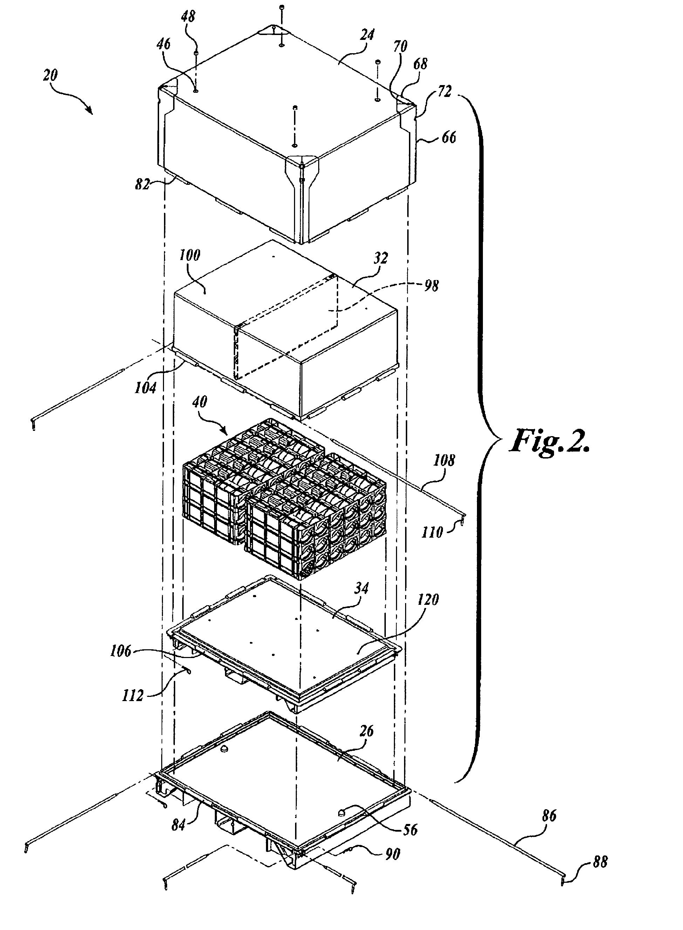

The base portion 26 of the outer container 22 is made from a suitable supportive material, such as a 6.3 mm (1/4-inch) thick steel plate, and is supported by formed sheet steel that creates a raised structure on the base portion 26, which is designed to be compatible with the forks of a forklift truck. As seen in FIGURE 2, the top side of the base portion 26 may include locating pins 56 that can be received within locator holes (not shown) on the bottom side of the base portion 34 of the inner container 30 for locating the inner container 30 within the outer container 22.

Referring to FIGURE 3, the cover portion 24 of the outer container 22 is preferably made in a sandwich construction including an outer layer 60, such as an outer steel sheet, an inner layer 62, such as an inner steel sheet, and a cushioning layer 64 in between the outer and inner layers. The cushioning layer 64 may be any suitable shock dampening, compressive, or cushioning material, including, but not limited to 0.16g/cm³ (10lb/ft³) polyurethane foam. As one non-limiting example of a suitable cover portion 24 sandwich construction, the cover portion 24 includes a 3.3 mm (0.13-inch) thick outer steel sheet 60, a 2.0 mm (0.08-inch) thick inner steel sheet 62, and a 5.8 cm (2.3-inch) thick cushioning layer 64 including nominally 0.16g/cm³ (10 lb/ft³) polyurethane foam in between the outer and inner layers 60 and 62. The cushioning layer 64 is preferably sealed between the inner and outer layers 60 and 62 to prevent moisture intrusion.

The edges and corners of the outer container 22 are preferably reinforced to improve the integrity of the outer container 22. Referring to FIGURES 2 and 3, the four vertical edges 66 and the top corners 68 may be reinforced with double sheets, for example, 3,3 mm (0.13-inch) thick outer steel sheet for reinforcement. In addition, the top corners 68 may be formed to create lifting pockets 70 for the purpose of lifting the cover portion 24 from the base portion 26. The external opening of each pocket 70 may include a slot that is designed to mate with a cable and swaged end fitting. Moreover, each pocket 70 may include a drain hole 72 to allow water to drain out. While the lifting pockets 70 are shown in the illustrated embodiment at each of the four top corners 68 of the outer container 22, it should be appreciated that pockets may be suitably located at any position on the cover portion 24.

Attachment of the cover portion 24 to the base portion 26 may be achieved by any suitable attachment method. In the illustrated embodiment, the cover portion 24 is attached to the base portion 26 by a tube and rod attachment system. Referring to FIGURES 2 and 3, the cover portion 24 includes a plurality of tubes 82 at the lower end of the cover portion 24 framework. In addition, the base portion 26 includes a plurality of alternating tubes 84 that mate with the tubes on the cover portion 24. As one non-limiting example, the tubing may be 1-inch outer diameter by 3.0 mm (0.12-inch) wall thickness steel tubes. In the illustrated embodiment, three tubes 82 are attached to the cover portion 24 and two alternating tubes 84 are attached to the base portion 26. However, it should be appreciated that other tube configurations are also within the scope of the present disclosure.

One or more retaining rods 86 can be inserted (or "stitched") into the alternating tubes 82 and 84 to secure the cover portion 24 to the base portion 26 through the tubes 82 and 84. The rods 86 may be tapered at one end and are approximately equal in length to the side of the outer container 22 to which they connect. Each rod 86 may have a short handle 88 at one end, which may be used to slide the rod 86 into place, but also may be used to secure a fully inserted rod 86. In that regard, once the rod 86 has been inserted, the handle 88 may be rotated into a secured position adjacent the base portion 26 of the outer container 22 (see FIGURE 3). The rod 86 may then be secured in place by a retainer pin 90, such as a hitch pin, or any other suitable securement device, ensuring that the retaining rods 86 stay in place and that the cover portion 24 of the outer container 22 remains attached to the base portion 26. The tube and rod attachment system provides a strong yet compliant joint that is capable of sustaining local damage without loss of integrity.

When assembled, any gap between the cover portion 24 and the base portion 26 may be closed by a dust seal (not shown), for example, a braided ceramic sleeving material, which may be attached to the base portion 26 of the outer container 22 by adhesive or another suitable attachment method.

The cover portion 24 for the outer container 22 may further include a ventilation mechanism to release any gases generated in the assembly 20, for example, in a fire event. In one suitable embodiment, the ventilation mechanism is one or more fire-consumable plugs 48 located in a ventilation hole 46 on the external surface of the cover portion 24 of the outer container 22 (see FIGURES 2 and 4).

Referring to FIGURES 2-4, the inner container 30 or cargo assembly will now be described in greater detail. The inner container 30 is designed to protect and confine radioactive material, for example, fuel bundles, or other contents being contained during transport (together with the outer container 22) and during storage (typically without the outer container 22). During transport, the outer container 22 generally provides drop and normal handling protection, and the inner container 30 generally provides fire protection. Because there is little risk of drop or handling accidents during storage, the inner container 30 can be used to store the radioactive material without an outer container 22.

In the illustrated embodiment, the inner container 30 is generally a flat-sided rectangular box including a cover portion 32 and a base portion 34 and defining an inner cavity 36. As seen in FIGURES 2-4, the inner container 30 is designed to be received by and fit within the inner cavity 28 of the outer container 22. In one non-limiting example, the flat-sided rectangular box may have a length of about 1,2 m (48.1 inches) a width of about 1,0 m (37.7 inches), and a height of about 58,0 cm (22.7 inches). It should be appreciated, however, that other shapes and sizes of inner containers are within the scope of the present disclosure, so long as they mate with the other components of the assembly 20.

As seen in FIGURE 3, the walls of the cover portion 32 of the inner container 30 are preferably made in a sandwich construction including an outer layer 92, such as an outer steel sheet, an inner layer 94, such as an inner steel sheet, and a refractory thermal insulation layer 96 in between the outer and inner layers 92 and 94. The insulation layer 96 may be any suitable insulation material, including, but not limited to ceramic insulation, for example, alumina silica insulation, such as the composite manufactured by UNIFRAX under the trade name FIBERFRAX® DURABOARD TYPE LD. As one non-limiting example of a suitable cover portion 32 sandwich construction, the cover portion 32 includes a 3,3 mm (0.13-inch) thick outer steel sheet 92, a 2,0 mm (0.08-inch) thick inner steel sheet 94, and a 2,5 cm (1-inch) thick insulation layer 96 in between the outer and inner layers 92 and 94. The insulation layer 96 is preferably sealed between the inner and outer layers 92 and 94 to prevent moisture intrusion. In one embodiment, all sides of the inner container 30 (including side walls and top wall of the cover portion 32) include refractory thermal insulation.

The cover portion 32 may include a center wall 98 coupled to the interior of the cover portion 32. The center wall 98 can be used to divide the inner cavity 36 of the inner container 30 into two portions. As a non-limiting example, the center wall 98 may have a cross-sectional thickness of 3,8 cm (1.5 inches) constructed of two 2,0 mm (0.08-inch) steel sheets separated by U-shaped reinforcements. The lower edge of the center wall 98 may further be reinforced, for example, by a 1-inch diameter by 3,0 mm (0.12-inch) wall thickness steel tube.

The cover portion 32 may further include lifting pockets 74 for the purpose of lifting the cover portion 32 from the base portion 34 of the inner container 30 (see FIGURE 4). Like the lifting pockets 70 on the outer container 22, the external opening of each pocket 74 may include a slot that is designed to mate with a cable and swaged end fitting. Each pocket 74 may also include a drain hole 76 to allow water to drain out. In the illustrated embodiment, the pockets 74 are located at the middle of each long top edge of the cover portion 32; however, it should be appreciated that pockets may be suitably located at any position on the cover portion 32.

Like the cover portion 24 for the outer container 22, the cover portion 32 for the inner container 30 may further include a ventilation mechanism to release any gases generated in the inner container 30, for example, in a fire event. In one suitable embodiment, the ventilation mechanism is one or more fire-consumable plugs 100 located in ventilation holes 102 on the external surface of the cover portion 32 of the inner container 30 (see FIGURES 3 and 4).

The base portion 34 of the inner container 30 is made from a suitable supportive material, such as a 6,3 mm (1/4-inch) thick steel plate, and is supported by formed sheet steel that creates a raised structure on the base portion 34. Like the base portion 26 of the outer container 22, the base portion 34 of the inner container 30 is designed to be compatible with the forks of a forklift truck. In one embodiment, at least a portion of the base portion 34 (for example, the central region of the base portion 34) may be covered with a ceramic insulating layer, such as a 2,5 cm (1-inch) thick layer of ceramic insulating board, enclosed within a steel wall, such as a 3,3 mm (0.13-inch) thick steel sheet, which is suitably affixed, for example, by welding to the base portion 34.

Attachment of the cover portion 32 to the base portion 34 may be achieved by any suitable attachment method. In the illustrated embodiment, the cover portion 32 is attached to the base portion 34 by a tube and rod attachment system, similar to the tube and rod attachment system for the outer container 22 described above. In that regard, the cover portion 32 includes a plurality of tubes 104 at the lower end of the cover portion 32 framework. In addition, the base portion 34 includes a plurality of alternating tubes 106 that mate with the tubes 104 on the cover portion 32. As one non-limiting example, the tubing may be 2,5 cm (1-inch) outer diameter by 3.0 mm (0.12-inch) wall thickness steel tubes. One or more rods 108 can be inserted (or "stitched") into the tubes 104 and 106 to secure the cover portion 32 to the base portion 34 through the tubes 104 and 106. In the illustrated embodiment, the rods 108 are secured by a handle 110 and retainer pin 112 securement system.

When assembled, any gap between the cover portion 32 and the base portion 34 may be closed by a dust seal (not shown), for example, braided ceramic sleeving material, which may be attached to the base portion 34 of the inner container 30 by adhesive or another suitable attachment method.

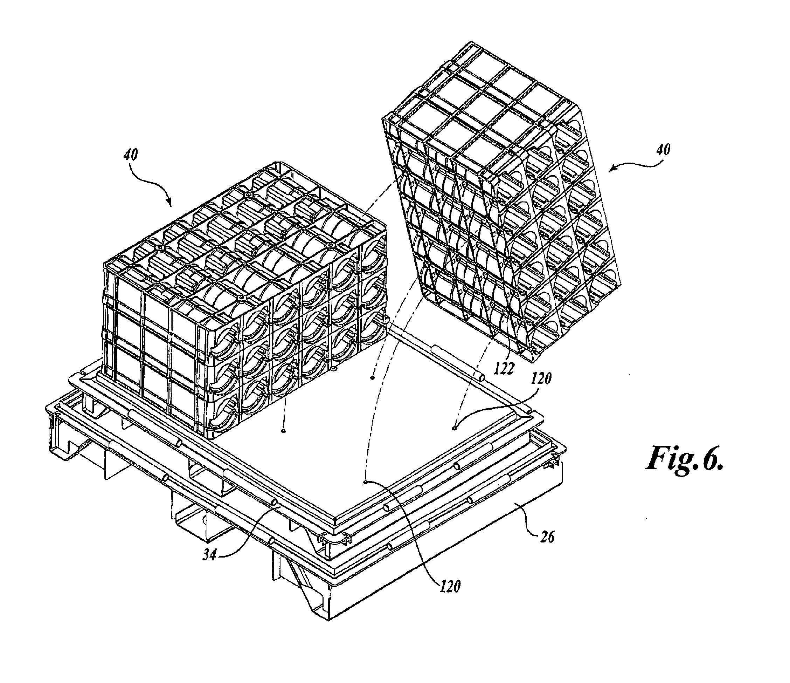

Referring to FIGURES 6 and 7, the internal support structure 40 will now be described in greater detail. The internal support structure 40 is configured to maintain the radioactive material in a subcritical configuration, and includes a plurality of discrete support trays 50. In one embodiment, the one or more discrete support trays 50 are stackable upon one another (see FIGURE 7).

Referring to FIGURE 7, the support trays 50 of the illustrated embodiment include first and second portions 52 and 54, wherein the first and second portions 52 and 54 are, respectively, upper and lower portions. In the illustrated embodiment, the first and second portions 52 and 54 include grooves 114 and 116 that when fit together form substantially horizontal cylindrical cavities 118. The substantially horizontal cylindrical cavities 118 are designed to contain and protect a plurality of fuel bundles B. As a non-limiting example, the first portion 52 of a support tray 50 is about 9.9 cm (3.9 inches) tall and the second portion 54 of a support tray 50 is about 3,6 cm (1.4 inches) tall. However, it should be appreciated that out shapes and sizes of support trays 50 are within the scope of the present disclosure, so long as they mate with the other components of the assembly 20.

Locating devices may be used to locate first and second portions 52 and 54 of individual support trays 50, adjacent support trays 50, stacking support trays 50, as well as locating the support trays 50 to the inner container 30. In the illustrated embodiment, the top side of the base portion 34 includes a plurality of locating pins 120 that can be received within locator holes 122 on the bottom side of the second portion 54 of a support tray 50 for locating the support tray 50 within the inner container 30 (see FIGURE 6). In addition, as seen in FIGURE 7, stacking support trays 50 include locator pins 124 and locator holes 126 in respective first and second portions 52 and 54 of individual support trays 50 on top of one another. In the illustrated embodiment, the locator pins 124 and locator holes 126 are positioned on respective first and second portions 52 and 54 on the ridges between respective grooves 114 and 116 that form horizontal cylindrical cavities 118. Moreover, adjacent support trays 50 may include locator pins 128 and locator holes 122 (see FIGURE 6) between adjacent stacking second portions 54 and first portions 52.

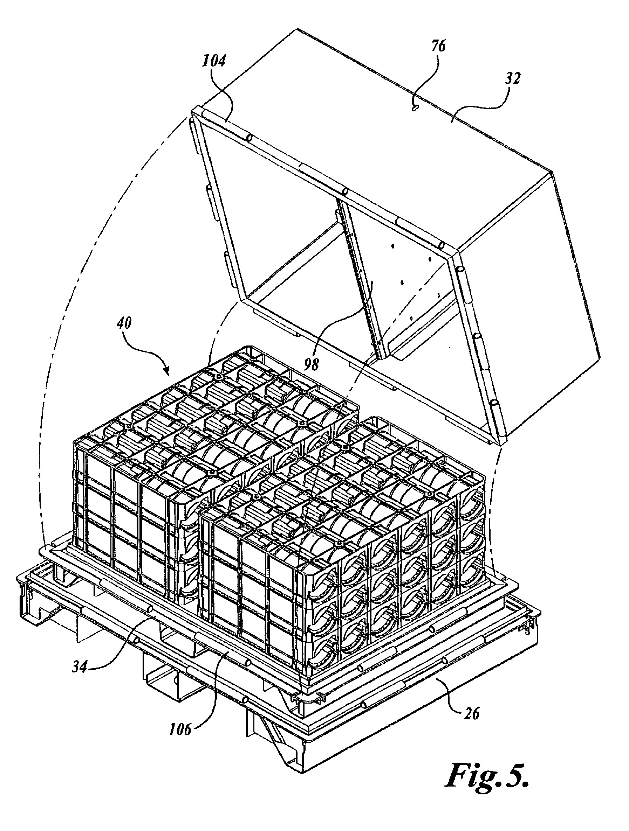

Referring to FIGURES 5-7, three support trays 50 in a stack are shown, each support tray 50 being configured to hold six fuel bundles B, such that a stack of three holds eighteen fuel bundles B (see FIGURE 7). The two stacks supported by the assembly 20 hold a total of thirty-six fuel bundles B (see FIGURES 5 and 6). However, it should be appreciated that other configurations to hold any number of fuel bundles are also within the scope of the present disclosure. It should further be appreciated that the support trays may include suitable stops to keep the contents in place. As a non-limiting example, the support trays in the illustrated embodiment include end stops 130 to keep the fuel bundles B from sliding within the support trays 50 or out the sides of the support trays 50 if the support trays 50 are tipped at an angle.

While shown as forming substantially horizontal cylindrical cavities 118, it should be appreciated that the first and second portions 52 and 54 may be configured in other configurations to optimally contain fuel bundles, fuel pellets, other radioactive materials, and/or containers of radioactive materials, or other materials. The internal support structure 40 is suitably designed to protect the contents it carries, while allowing easy access to the contents for regulatory verification and inspection. The internal support structure 40 must also be compatible with probes, such as radiation sensing probes, used by inspectors, for example, to allow access and minimize probe interference.

As mentioned above, the internal support structure 40 is made from non-metallic materials. The internal support structure 40 is preferably manufactured from a material having a resistance to brittle fracture behavior at high strain rates (accident conditions of transport, such as a 9-meter (30-foot) free drops) and an ability to withstand temperatures associated with the regulatory fire and added storage area fire (such as a 30 minute, 550°C storage area fire). The internal support structure 40 has heat resistance up to about 260°C (500°F).

In one suitable embodiment, the internal support structure 40 may have a minimum tensile strength of 10.10 kg/m² (22 ksi). In another suitable embodiment, the internal support structure 40 may have a minimum Izod impact (notched) of 12.5 g/mm (23 ft-lb/in). The tensile and impact strength of the support trays are directly related to design of the internal support structure 40 and the specifications depend on specific design configurations and payload requirements.

The internal support structure 40 is made from a composite material, such as a lightweight polymer molding compounds. The polymer is reinforced with fibers including Kevlar, graphite, stainless steel, fiberglass fibers, and combinations thereof. In one embodiment, a fiberglass reinforced polyester trays were modeled with a density of 1.84 g/cm³ (nominal density is 1.92 g/cm³). In another embodiment, a suitable density for the fiberglass reinforced polymer trays is in the range of about 0.6 g/cm³ to about 2.8 g/cm³.

Suitable molding compounds include reinforced thermosets. Suitable thermosets include polyester and vinylester.

The material may be provided as a pre-cured sheet, which is then molded into tray components by the application of pressure and heat. In another embodiment, the composite material that makes up the support tray assemblies includes a flame retardancy or suppressant compound, such as zinc, antimony, bromine, aluminum tri-hydrate, or any other specified flame retardant or suppressant.

As a non-limiting example, the support trays 50 may be molded from a reinforced polyester resin having a thickness of about 4,8 mm (3/16 inch). In addition, as another non-limiting example, the support trays 50 may include a reinforcing web on the back side of each tray portion having a thickness of about 4,8 mm (3/16 inch) to impart additional strength and stiffness to the support trays 50. As yet another non-limiting example, the support trays 50 may be lined with a cushioning foam (not shown), such as a elastic polyurethane foam, to provide a soft interface for the radioactive material to help secure the radioactive material in the support trays 50. Such foam may be attached to the support trays 50 with adhesive.

Suitable methods of making thermoset polymer internal support structures may include one or more of the following methods: (1)traditional wet lay-up; (2) resin transfer molding (RTM); (3) RTM-lite; (4) bulk molding compound (BMC) or sheet molding compound (SMC); and (5) epoxy prepreg. Other molding processes may be used.

The internal support structure 40 may optionally include wear pads and/or vibration dampeners to protect the internal support structure 40 from wear. Because the internal support structure 40 is a non-metallic structure, if not protected, if may tend to wear at any interface between separate components of the internal support structure 40 and at any interface between the internal support structure 40 and the inner container 30. Such wearing may produce unwanted dust in the package assembly 20 or may affect the integrity of the package assembly 20.

As seen in FIGURE 7, the support trays 50 of the illustrated embodiment may include protective linings or wear pads at the interfaces between the first and second portions 52 and 54 of the support trays 50. As non-limiting examples, interfacing locator pins 124 and/or locator holes 126 of respective first and second portions 52 and 54 of the support trays 50 may include protective linings or wear pads. In addition, interfacing locator pins 128 and locator holes 122 (see FIGURE 6) between adjacent stacking second portions 54 and first portions 52 may include protective linings. Moreover, other interfacing regions of the support trays 50, such as ribs 134 created during the molding of polymer support trays, may include protective linings or wear pads. Suitable wear pads may be manufactured from polyethylene or other wear resistant compounds.

Referring to FIGURE 3, the internal support structure 40 may further include one or more preload mechanisms 136 for vibrational dampening to further prevent wear to the internal support structure 40. In the illustrated embodiment, the preload mechanisms arc shown as compression structures, such as compressive foam, located in the upper corners of the inner container 30. However, it should be appreciated that suitable preload mechanisms may be located in any position surrounding the internal support structure 40. As one non-limiting example, the preload mechanism 136 may be integrally formed with the cover portion 32 of the inner container 30. As another non-limiting example, the preload mechanism 136 may be integrally formed with the base portion 34 of the inner container 30. It should further be appreciated that other types of preload mechanisms are within the scope of the present disclosure, including but not limited to springs, biasing members, and other compressive structures.

### EXAMPLE

### TRAY MATERIAL COMPOSITION

In one comparative example, a suitable light weight fiberglass reinforced polyester resin thermoset support tray modeled with a density of 1.84 g/cm³ (nominal density is 1.92 g/cm³) included the following composition:

| Component | Wt% | Assumed Wt% |
|---|---|---|
| C | 25 | 25 |
| O | 38 | 38 |
| H | 2 | 2 |
| Br | 2 | 2 |
| Sb | 1 | 1 |
| Ca | 8 | 8 |
| N | 1 | 1 |
| Si | 18 | 23 |
| Other | 5 | 0 |

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. While illustrative embodiments have been illustrated and described, it will be appreciated that various changes can be made therein without departing from the scope of the disclosure.

## Claims

1. A package assembly (20) for radioactive material, comprising:
(a) a container (22); and
(b) an internal support structure (40) disposed within the container, the internal support structure (40) including at least one support tray (50), the internal support structure being made from non-metallic materials, wherein the at least one support tray (50) has lower and upper portions (52, 54), wherein the upper and lower and portions (52, 54) fit together and form cavities (118) designed to contain and protect the radioactive material, wherein the package is designed to maintain the radioactive material in a subcritical configuration **characterized in that** the support tray is made from polyester and vinylester thermosets and mixtures thereof, wherein the internal support structure has heat resistance up to about 260°C (about 500°F), wherein the polyester and vinylester thermosets and mixtures thereof are reinforced with fibers selected from the group consisting of Kevlar, graphite, stainless steel, fiberglass, and combinations thereof.

2. The package assembly of Claim 1, wherein the internal support structure (40) includes a flame retardancy compound.

3. The package assembly of Claim 1, wherein the internal support structure (40) is lined with a cushioning foam to secure the radioactive material.

4. The package assembly of Claim 1, wherein the radioactive material is selected from the group consisting of fuel assemblies, fuel pellets, fuel rods, and containers of radioactive material.

## Patentansprüche

1. Eine Packungsanordnung (20) für radioaktives Material, aufweisend:
a) einen Container (22); und
b) eine interne Stützstruktur (40), die innerhalb des Containers angeordnet ist, wobei die interne Stützstruktur (40) zumindest einen Stützeinsatz (50) einschließt, wobei die interne Stützstruktur aus nichtmetallischen Materialien hergestellt ist, wobei der zumindest eine Stützeinsatz (50) obere und untere Teile (52, 54) aufweist, wobei die oberen und unteren Teile (52, 54) zusammenpassen und Hohlräume (118) ausbilden, die dazu ausgelegt sind, das radioaktive Material zu beinhalten und zu schützen, wobei die Packung ausgelegt ist, das radioaktive Material in einer subkritischen Konfiguration zu halten, **dadurch gekennzeichnet, dass** der Stützeinsatz aus Polyester- und Vinylester-Duroplasten und Mixturen davon gebildet ist, wobei die interne Stützstruktur einen Wärmewiderstand bis zu etwa 260°C (etwa 500° F) aufweist, wobei die Polyester und Vinylester-Duroplasten und Mixturen davon mit Fasern verstärkt sind, die ausgewählt sind aus der Gruppe bestehend aus: Kevlar, Graphit, Edelstahl, Fiberglas und Kombinationen davon.

2. Die Packungsanordnung nach Anspruch 1, wobei die interne Stützstruktur (40) eine flammhemmende Verbindung einschließt.

3. Die Packungsanordnung nach Anspruch 1, wobei die interne Stützstruktur (40) mit einem dämpfenden Schaum gefüttert ist, um das radioaktive Material zu sichern.

4. Die Packungsanordnung nach Anspruch 1, wobei das radioaktive Material ausgewählt ist aus der Gruppe bestehend aus Brennelementen, Brennstofftabletten, Brennstäben und Containern von radioaktivem Material.

## Revendications

1. Ensemble d'emballage (20) pour matériau radioactif, comprenant :
(a) un conteneur (22) ; et
(b) une structure de support interne (40) disposée dans le conteneur, la structure de support interne (40) comprenant au moins un plateau de support (50) , la structure de support interne étant réalisée en matériaux non métalliques, dans lequel le au moins un plateau de support (50) comporte des portions inférieure et supérieure (52, 54), dans lequel les portions supérieure et inférieur (52, 54) s'emboîtent et forment des cavités (118) conçues pour contenir et protéger le matériau radioactif, dans lequel l'emballage est conçu pour maintenir le matériau radioactif dans une configuration sous-critique **caractérisé en ce que** le plateau de support est réalisé en thermodurcis de polyester et ester de vinyle et leurs mélanges, dans lequel la structure de support interne a une résistance à la chaleur jusqu'à environ 260 °C (environ 500 °F), dans lequel les thermodurcis de polyester et ester de vinyle et leurs mélanges sont renforcés par des fibres choisies dans le groupe constitué par le Kevlar, le graphite, l'acier inoxydable, la fibre de verre, et leurs combinaisons.

2. Ensemble d'emballage selon la revendication 1, dans lequel à structure de support interne (40) comprend un composé retardateur de flamme.

3. Ensemble d'emballage selon la revendication 1, dans lequel la structure de support interne (40) est doublée d'une mousse de rembourrage afin de sécuriser le matériau radioactif.

4. Ensemble d'emballage selon la revendication 1, dans lequel le matériau radioactif est choisi dans le groupe constitué par les assemblages combustibles, les pastilles de combustible, les barres de combustible, et les conteneurs de matériau radioactif.
